# EUROPEAN PATENT APPLICATION

(11) **EP 4 290 646 A2**
(43) Date of publication of application: **13.12.2023**
(21) Application number: 23168184.2
(22) Date of filing: 17.04.2023
(51) Int. Cl.: H01M 10/42, H01M 10/48, H01M 50/209

(54) **BATTERY AND ENERGY STORAGE SYSTEM**

(30) Priority: 20.04.2022 CN 202210414448
(71) Applicant: Huawei Digital Power Technologies Co., Ltd., Shenzhen, Guangdong 518043 (CN)
(72) Inventor: LI, Zhibo, Shenzhen, 518043 (CN); HOU, Tianhong, Shenzhen, 518043 (CN); LU, Junliang, Shenzhen, 518043 (CN)
(74) Representative: Gill Jennings & Every LLP

(57) **Abstract**

This application provides a battery and an energy storage system. The battery includes a battery housing, at least two cells (for example, a first cell and a second cell), a temperature detection board, and a temperature sensor. The first cell and the second cell are disposed in the battery housing. The temperature detection board is disposed between the first cell and the second cell, and a board body of the temperature detection board is provided with an accommodation space. The temperature sensor is placed in the accommodation space, and the temperature sensor can sense an internal temperature of the battery. By implementing this application, the internal temperature of the battery can be directly sensed, and accuracy is high.

## Description

### TECHNICAL FIELD

This application relates to the field of battery technologies, and in particular, to a battery and an energy storage system.

### BACKGROUND

Safety problems of batteries are mainly caused by thermal runaway inside a battery. Therefore, a temperature of a battery needs to be accurately monitored. In the conventional technology, temperature monitoring of a battery is mainly concentrated on a surface or positive and negative tabs of the battery. However, in a process in which thermal runaway occurs on the battery, an internal temperature of the battery changes faster, and a temperature change on the surface or positive and negative tabs of the battery lags behind. In other words, a temperature difference between the internal temperature of the battery and the temperatures of the surface and positive and negative tabs of the battery is large. For example, when the internal temperature of the battery has reached a thermal runaway warning temperature, but the temperatures of the surface and positive and negative tabs of the battery are still rising, it is difficult to issue a real-time warning of the thermal runaway of the battery. In conclusion, in the conventional technology, the internal temperature of the battery measured based on the temperature of the surface or positive and negative tabs of the battery is insufficiently accurate.

### SUMMARY

This application provides a battery and an energy storage system, so that an internal temperature of the battery can be directly sensed, and accuracy is high.

According to a first aspect, an embodiment of this application provides a battery. The battery includes a battery housing, at least two cells (for example, a first cell and a second cell), a temperature detection board, and a temperature sensor. The first cell and the second cell are disposed in the battery housing. The temperature detection board is disposed between the first cell and the second cell, and a board body of the temperature detection board is provided with an accommodation space. The temperature sensor is placed in the accommodation space, and the temperature sensor can sense an internal temperature of the battery.

In this embodiment of this application, the temperature detection board is disposed in the battery, and the temperature sensor is disposed in the accommodation space of the temperature detection board, so that the internal temperature of the battery can be sensed. In other words, in this embodiment of this application, the internal temperature of the battery is sensed by changing a structure of the battery.

With reference to the first aspect, in a first possible implementation, a thickness of the temperature detection board is greater than or equal to a thickness of the temperature sensor in a first direction, and the first direction is a direction perpendicular to the temperature detection board.

With reference to the first possible implementation of the first aspect, in a second possible implementation, the temperature sensor is accommodated in the accommodation space in the temperature detection board. In this embodiment of this application, surfaces of the temperature detection board that are in direct contact with the first cell and the second cell are both flat without protrusions or depressions, so that impact of uneven force from the temperature detection board and the temperature sensor on the first cell and the second cell can be alleviated, that is, a degree of damage caused by the uneven force on a separator and an electrode of the first cell and a separator and an electrode of the second cell is reduced.

With reference to the first possible implementation of the first aspect, in a third possible implementation, a first surface of the temperature sensor is flush with a first surface of the temperature detection board, and a second surface of the temperature sensor is flush with a second surface of the temperature detection board. In this embodiment of this application, because the first surface of the temperature sensor is flush with the first surface of the temperature detection board, and the second surface of the temperature sensor is flush with the second surface of the temperature detection board, that is, the temperature sensor is neither protruded nor depressed relative to the temperature detection board, a degree of damage caused by uneven force on a separator between the first cell and the second cell can also be reduced. In addition, the temperature sensor may be in direct contact with the first cell and the second cell, and use temperatures of the first cell and the second cell that are obtained by direct measurement as internal temperatures of the battery, so that a measurement result is more accurate.

With reference to the first aspect or with reference to any one of the foregoing possible implementations of the first aspect, in a fourth possible implementation, a first projection of the first cell on a first plane along the first direction overlaps a second projection of the second cell on the first plane along the first direction, and the first direction is perpendicular to the first plane.

With reference to the fourth possible implementation of the first aspect, in a fifth possible implementation, an inner surface of the first cell is in contact with the first surface of the temperature detection board, and a contact area between the inner surface of the first cell and the first surface of the temperature detection board is an area of the first surface of the temperature detection board, where the inner surface of the first cell is a surface of the first cell facing the temperature detection board; and the second surface of the temperature detection board is in contact with an inner surface of the second cell, and a contact area between the second surface of the temperature detection board and the inner surface of the second cell is an area of the second surface of the temperature detection board, where the inner surface of the second cell is a surface of the second cell facing the temperature detection board. In other words, in this case, the first cell, the temperature detection board, and the second cell are vertically placed.

With reference to the fourth possible implementation of the first aspect, in a sixth possible implementation, a third projection of the temperature detection board on the first plane along the first direction is located in the first projection region or the second projection region.

With reference to the first aspect or with reference to any one of the foregoing possible implementations of the first aspect, in a seventh possible implementation, a quantity of temperature sensors is related to a size of the first cell and a size of the second cell.

With reference to the first aspect or with reference to any one of the foregoing possible implementations of the first aspect, in an eighth possible implementation, a shape of the accommodation space of the temperature detection board is related to a shape of the temperature sensor.

With reference to the first aspect or with reference to any one of the foregoing possible implementations of the first aspect, in a ninth possible implementation, the battery further includes a signal cable, and the signal cable is coupled to the temperature sensor. The battery housing includes a battery cover, and the battery cover is provided with a reserved hole. The signal cable is led out of the battery housing through the reserved hole of the battery cover, and is coupled to a battery management system. The signal cable may send the internal temperature of the battery sensed by the temperature sensor to the battery management system.

With reference to the first aspect or with reference to any one of the foregoing possible implementations of the first aspect, in a tenth possible implementation, the temperature sensor includes at least one of a temperature transducer, a thermistor, a thermocouple, and a resistance and temperature monitor.

With reference to the first aspect or with reference to any one of the foregoing possible implementations of the first aspect, in an eleventh possible implementation, an outer surface of the temperature sensor has an insulating material.

With reference to the first aspect or with reference to any one of the foregoing possible implementations of the first aspect, in a twelfth possible implementation, the temperature detection board is made of a thermal insulation and corrosion-resistant material.

According to a second aspect, an embodiment of this application provides an energy storage system. The energy storage system includes the battery in the first aspect or any possible implementation of the first aspect and a battery management system coupled to the battery. The battery management system may receive an internal temperature of the battery sensed by the temperature sensor in the battery, and monitor the battery based on the internal temperature of the battery.

It should be understood that, for implementations and beneficial effects of the foregoing aspects of this application, reference may be made to each other.

### BRIEF DESCRIPTION OF DRAWINGS

FIG. 1 is a block diagram of a structure of an energy storage system according to an embodiment of this application;
FIG. 2 is a schematic diagram of an exploded structure of a battery according to an embodiment of this application;
FIG. 3 is a schematic diagram of an overall structure of a battery according to an embodiment of this application;
FIG. 4 is a schematic diagram of an overall structure of a temperature detection board according to an embodiment of this application;
FIG. 5 is a cross-sectional diagram along A-A in FIG. 4 according to an embodiment of this application;
FIG. 6 is a schematic diagram of another overall structure of a temperature detection board according to an embodiment of this application;
FIG. 7 is a cross-sectional diagram along A-A in FIG. 6 according to an embodiment of this application;
FIG. 8 is a schematic diagram of another overall structure of a temperature detection board according to an embodiment of this application; and
FIG. 9 is a cross-sectional diagram along A-A in FIG. 8 according to an embodiment of this application.

### DESCRIPTION OF EMBODIMENTS

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Implementations of the technical solutions of this application are further described below in detail with reference to the accompanying drawings.

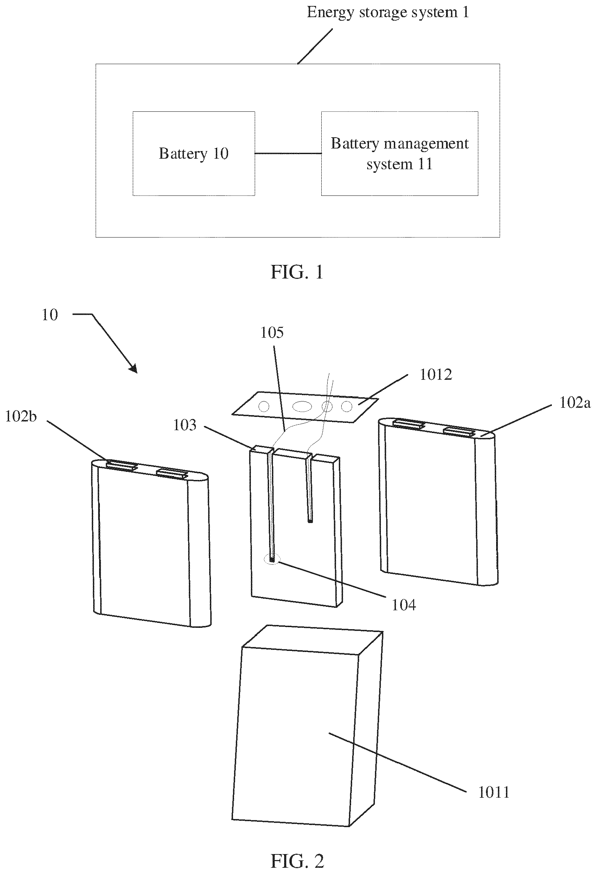

FIG. 1 is a block diagram of a structure of an energy storage system according to an embodiment of this application. As shown in FIG. 1, the energy storage system 1 provided in this embodiment of this application includes a battery 10 and a battery management system (Battery Management System, BMS) 11 coupled to the battery 10.

The battery 10 may be specifically implemented as a lithium battery, a lead acid battery, a sodium battery, a magnesium battery, an aluminum battery, a potassium battery, a nickel cadmium battery, a nickel hydrogen battery, a lithium polymer battery, or the like. In other words, an electrode material of the battery is not limited in this embodiment of this application.

The battery management system 11 may be specifically implemented as a circuit board, or if the circuit board is placed in a box and plastically packaged, the battery management system 11 may be specifically implemented as a hardware box.

The battery 10 includes a temperature detection board, a temperature sensor, and a signal cable coupled to the temperature sensor. A board body of the temperature detection board is provided with an accommodation space. The temperature sensor is placed in the accommodation space, and the temperature sensor specifically sends, to the battery management system 11 by using the signal cable, an internal temperature of the battery 10 sensed by the temperature sensor. The battery management system 11 receives the internal temperature of the battery 10, and monitors the battery 10 based on the internal temperature of the battery 10.

For example, when the internal temperature of the battery 10 is equal to a thermal runaway temperature (for example, 140°C), the battery management system 11 issues a battery thermal runaway warning. Alternatively, when the internal temperature of the battery 10 is less than the thermal runaway temperature by a preset threshold, the battery management system 11 issues a battery thermal runaway warning. Alternatively, when a change speed of the internal temperature of the battery 10 is greater than a preset speed, the battery management system 11 issues a battery thermal runaway warning. In this embodiment of this application, the internal temperature of the battery is detected, so that thermal runaway of the battery can be found as early as possible, thereby effectively preventing a safety problem caused by thermal runaway.

For another example, a state of charge (State of Charge, SOC) of the battery is related to a temperature of the battery. Therefore, the battery management system 11 may estimate the state of charge (State of Charge, SOC) of the battery based on the internal temperature of the battery 10, to improve accuracy of estimating the state of charge of the battery.

In some feasible implementations, the energy storage system 1 provided in this embodiment of this application may be specifically used in a photovoltaic power generation system, a wind energy power generation system, or the like. In an example in which the energy storage system 1 is used in the photovoltaic power generation system, the battery 10 is disposed between a photovoltaic module and an inverter. The battery 10 may store electric energy generated by the photovoltaic module, and may further output the stored electric energy to the inverter, so that the inverter can invert a direct current output by the battery 10 into an alternating current, and provide the alternating current to an electric device, or combine the alternating current into an alternating current power grid.

Optionally, in some feasible implementations, the energy storage system 1 provided in this embodiment of this application may be specifically used in an electric vehicle. In this case, the battery 10 may be disposed between a charging interface and a motor of the electric vehicle. The battery 10 stores electric energy provided by a charging pile, and may further provide the stored electric energy to the motor, to drive the motor to rotate, thereby providing power to the electric vehicle.

Optionally, in some feasible implementations, the energy storage system 1 provided in this embodiment of this application may be further specifically used in a consumer electronic product (for example, a smartphone, a smartwatch, a smart band, or a Bluetooth headset), and the battery 10 may be specifically understood as a digital battery corresponding to the consumer electronic product.

In conclusion, the energy storage system 1 provided in this embodiment of this application is different from an energy storage system in a conventional technology in that, the battery 10 included in the energy storage system 1 is different from a battery included in the energy storage system in the conventional technology. In a specific implementation, in this embodiment of this application, the temperature detection board is disposed in the battery 10, the board body of the temperature detection board is provided with the accommodation space, and the temperature sensor is placed in the accommodation space, so that the internal temperature of the battery can be sensed. In other words, in this embodiment of this application, the internal temperature of the battery is sensed by changing a structure of the battery 10.

A specific structure of the battery 10 is described below with reference to the accompanying drawings.

FIG. 2 is a schematic diagram of an exploded structure of a battery according to an embodiment of this application. As shown in FIG. 2, the battery 10 includes a battery housing, at least two cells (for example, a first cell 102a and a second cell 102b), a temperature detection board 103, and a temperature sensor 104.

It should be noted that, FIG. 2 shows an example in which a shape of the battery housing is a cuboid. In this embodiment of this application, the battery housing includes a battery frame 1011 and a battery cover 1012 disposed on a top of the battery frame 1011. The battery frame 1011 may be formed by enclosure by four side surfaces and one bottom surface of the cuboid.

Optionally, the shape of the battery housing may also be specifically implemented as a cylinder, a cube, or the like (not shown in the figure). For example, when the shape of the battery housing is a cylinder, the battery frame may be formed by enclosure by a side surface of the cylinder and one bottom surface of the cylinder. A specific shape of the battery housing is not limited in this embodiment of this application.

The first cell 102a and the second cell 102b are disposed in the battery housing. In a specific implementation, the battery cover 1012 and the battery frame 1011 form an accommodation cavity by enclosure, and the first cell 102a and the second cell 102b are disposed in the accommodation cavity.

For example, the first cell 102a may be connected in series to the second cell 102b. In this case, a positive electrode of the first cell 102a is connected to a negative electrode of the second cell 102b, a negative electrode of the first cell 102a is a negative electrode of the battery 10, and a positive electrode of the second cell 102b is a positive electrode of the battery 10. Alternatively, the first cell 102a may be connected in parallel to the second cell 102b. In this case, the negative electrode of the first cell 102a is connected to the negative electrode of the second cell 102b, the positive electrode of the first cell 102a is connected to the positive electrode of the second cell 102b, both the negative electrode of the first cell 102a and the negative electrode of the second cell 102b are negative electrodes of the battery 10, and both the positive electrode of the first cell 102a and the positive electrode of the second cell 102b are positive electrodes of the battery 10. In other words, a connection relationship between cells in at least two cells in the battery 10 is not limited in this embodiment of this application.

A temperature detection board 103 is disposed between the first cell 102a and the second cell 102b, and a board body of the temperature detection board 103 is provided with an accommodation space. It may be understood that, the temperature detection board 103 may be separately assembled and then inserted between the two cells (that is, the first cell 102a and the second cell 102b), so that an existing battery assembly process is slightly changed and assembly is simple.

In some feasible implementations, the temperature detection board 103 is also disposed in the accommodation cavity. Because an electrolyte is injected into the accommodation cavity, the temperature detection board 103 may be made of a thermal insulation and corrosion-resistant material. The thermal insulation and corrosion-resistant material may be, for example, poly tetra fluoro ethylene (Poly tetra fluoro ethylene, PTFE). Therefore, the temperature detection board can be prevented from being corroded by the electrolyte.

Optionally, a shape of the temperature detection board in this embodiment of this application may be a rectangle, a circle, an ellipse, or a trapezoid. In other words, the shape of the temperature detection board is not limited in this embodiment of this application.

It should be noted that, in the accompanying drawings in embodiments of this application, an example in which the battery includes two cells is used. In actual application, a quantity of cells in the battery may be greater than 2. In addition, the temperature detection board 103 and the temperature sensor 104 described in embodiments of this application exist between any two cells, or the temperature detection board 103 and the temperature sensor 104 described in embodiments of this application exist between every two cells.

In some feasible implementations, a first projection of the first cell 102a on a first plane along the first direction overlaps a second projection of the second cell 102b on the first plane, and the first direction is perpendicular to the first plane. In this case, a spatial position relationship between the first cell 102a and the second cell 102b in the battery housing may be intersection or parallelism to each other.

Optionally, an inner surface of the first cell 102a is in contact with the first surface of the temperature detection board 103, and the second surface of the temperature detection board 103 is in contact with an inner surface of the second cell 102b. It should be noted that, the inner surface of the first cell 102a is a surface of the first cell 102a facing the temperature detection board 103, and the inner surface of the second cell 102b is a surface of the second cell 102b facing the temperature detection board 103. In this case, the first surface of the temperature detection board 103 may be a surface of the temperature detection board 103 facing the first cell 102a, and the second surface of the temperature detection board 103 may be a surface facing the second cell 102b. The first plane may be a plane in which the first surface of the temperature detection board 103 is located, or a plane parallel to the plane in which the first surface of the temperature detection board 103 is located.

In this case, a contact area between the inner surface of the first cell 102a and the first surface of the temperature detection board 103 is an area of the first surface of the temperature detection board 103. To be specific, the first cell 102a is vertically placed adjacent to the first surface of the temperature detection board 103. In addition, a contact area between the second surface of the temperature detection board 103 and the inner surface of the second cell 102b is an area of the second surface of the temperature detection board 103. To be specific, the second cell 102b is vertically placed adjacent to the second surface of the temperature detection board 103. For example, an area of the first surface of the temperature detection board 103 is equal to an area of the second surface of the temperature detection board 103.

In this embodiment of this application, the first cell 102a, the temperature detection board 103, and the second cell 102b are vertically placed side by side in sequence. In other words, in the battery housing, the first cell 102a, the second cell 102b, and the temperature detection board 103 are located in planes parallel to each other.

Optionally, in some feasible implementations, a third projection of the temperature detection board 103 on the first plane along the first direction is located in the first projection region or the second projection region. In other words, the area of the first surface of the temperature detection board 103 is less than or equal to the area of the inner surface of the first cell 102a, and the area of the second surface of the temperature detection board 103 is also less than or equal to the area of the inner surface of the second cell 102b. In a specific implementation, the area of the inner surface of the first cell 102a may be equal to the area of the inner surface of the second cell 102b, and the first cell 102a and the second cell 102b are parallel to each other and are not staggered with each other. That is, the first cell 102a and the second cell 102b are vertically arranged side by side. The temperature detection board 103 is also vertically placed between the first cell 102a and the second cell 102b, and a size of the temperature detection board 103 is less than or equal to a size of the first cell 102a and a size of the second cell 102b. It should be noted that, the size of the temperature detection board 103 may be understood as the area of the first surface or the area of the second surface of the temperature detection board 103, the size of the first cell 102a may be understood as the area of the inner surface of the first cell 102a, and the size of the second cell 102b may be understood as the area of the inner surface of the second cell 102b. In conclusion, compared with the battery in the conventional technology, even if the temperature detection board is added to the battery in embodiments of this application, the area of the first surface of the temperature detection board is always less than the area of the inner surface of each cell, and an area of the battery is still determined by the area of the inner surface of the cell.

For example, a ratio of the area of the first surface of the temperature detection board 103 to the area of the inner surface of the first cell 102a may be greater than or equal to 80% and less than or equal to 100%. The inventor of this application finds in a research and practice process that, if the area of the first surface of the temperature detection board 103 is excessively small, subsequent expansion of the battery is affected, causing damage to a separator and an electrode of the cell.

The temperature sensor 104 is placed in the accommodation space of the temperature detection board 103, and can directly sense the internal temperature of the battery 10. In this way, accuracy of the internal temperature of the battery obtained through sensing is high.

For example, the temperature sensor may include at least one of a temperature transducer, a thermistor, a thermocouple, and a resistance and temperature monitor. A specific implementation of the temperature sensor is not limited in this embodiment of this application, provided that the temperature sensor is a device that can sense a temperature.

In some feasible implementations, the battery 10 further includes a signal cable 105, and the signal cable 105 is coupled to the temperature sensor 104. The signal cable 105 is led out of the battery housing through a reserved hole of the battery cover 1012, and is coupled to a battery management system (not shown in the figure). The signal cable 105 may send, to the battery management system, the internal temperature of the battery 10 sensed by the temperature sensor 104.

Optionally, because an electrolyte is injected into the accommodation cavity, in a specific implementation, the reserved hole of the battery cover 1012 may be sealed by using a rubber plug or another material that is resistant to electrolyte corrosion.

An outer surface of the temperature sensor 104 has an insulating material, for example, a material such as polyimide or para-xylene. Further, an outer surface of the signal cable 105 may also be coated with the insulating material. By implementing this embodiment of this application, corrosion caused by direct contact between the temperature sensor and the electrolyte, or a short circuit caused by contact between the temperature sensor and a tab can be avoided.

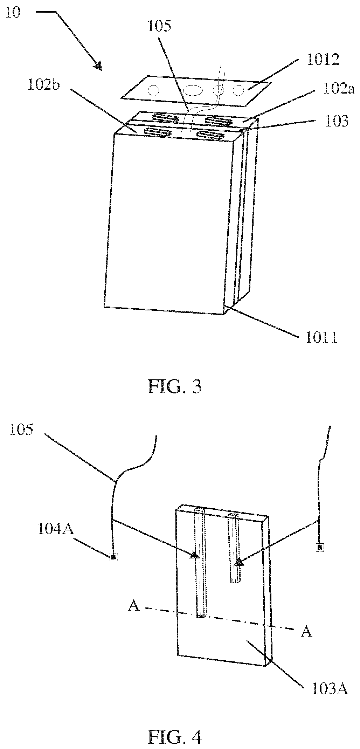

In this case, the first cell 102a, the second cell 102b, the temperature detection board 103, and the temperature sensor 104 are combined and fastened, and then placed in the accommodation cavity formed by enclosure by the battery frame 1011 and the battery cover 1012, so that a diagram of an overall structure of the battery 10 shown in FIG. 3 can be obtained. Different from the battery in the conventional technology, the battery 10 provided in this embodiment of this application has the signal cable 105 led out from the battery housing. To be specific, in addition to terminals of positive and negative electrodes of the battery in the conventional technology, the signal cable 105 is further added to the battery 10.

It should be noted that, in FIG. 3, an example in which the size of the temperature detection board is equal to the size of the first cell and the size of the second cell is used. In actual application, the size of the temperature detection board may be less than the size of the first cell and the size of the second cell. To be specific, an edge part of the temperature detection board may not be flush with an edge part of the first cell and an edge part of the second cell (not shown in the figure).

It may be understood that, a quantity of signal cables is related to a quantity of temperature sensors, and one temperature sensor correspondingly has at least one signal cable. However, in some feasible implementations, the quantity of temperature sensors in the temperature detection board is related to the size of the first cell and the size of the second cell. To be specific, the temperature detection board shown in FIG. 2 and FIG. 3 includes two temperature sensors. This should be understood as an example rather than a limitation.

For example, when the area of the inner surface of the first cell 102a is equal to the area of the inner surface of the second cell 102b, a proportional relationship between the quantity of temperature sensors and the area of the inner surface of the first cell 102a may be specifically implemented as 1/50cm², that is, one temperature sensor is disposed every 50 square centimeters on the inner surface of the first cell 102a. By implementing this embodiment of this application, temperatures collected by the temperature sensor can cover the entire first cell and second cell to the greatest extent, and the sensed temperature data is more accurate.

It should be noted that, an example in which the battery shown in FIG. 2 is a coiled battery is used, and the cell described in this application may be specifically understood as a jellyroll in the coiled battery. A positive electrode (or a negative electrode), a first separator, a negative electrode (or a positive electrode), and a second separator are sequentially disposed on the jellyroll from inside to outside, a protruding positive tab is disposed on the positive electrode, and a protruding negative tab is disposed on the negative electrode. Optionally, the battery in this embodiment of this application may further be specifically implemented as a laminated battery. In this case, the cell described in this application is specifically understood as a cell in the laminated battery. In this case, the cell includes a jellyroll and an electrolyte. Alternatively, the battery in this embodiment of this application may further be specifically implemented as a blade battery, and the cell in this embodiment of this application is a cell used by the blade battery. In conclusion, in this embodiment of this application, a specific type of the battery is not limited, and a specific processing process of the cell is not limited.

The following describes relative positions of the temperature sensor and the accommodation space of the temperature detection board with reference to the accompanying drawings.

In a specific implementation, when the temperature sensor is placed in the accommodation space of the temperature detection board, a thickness of the temperature sensor in the first direction is less than or equal to a thickness of the temperature detection board. The first direction is a direction perpendicular to the temperature detection board.

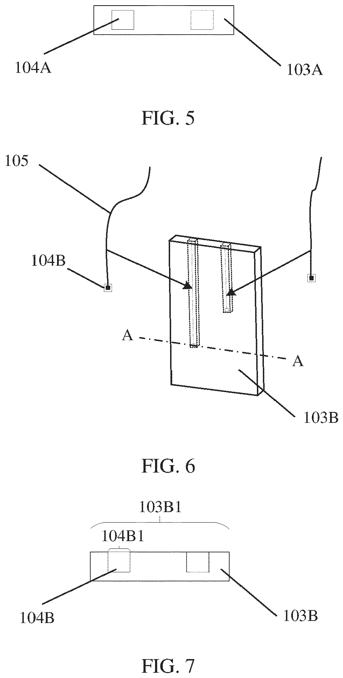

Optionally, in some feasible implementations, refer to both FIG. 4 and FIG. 5. FIG. 4 is a schematic diagram of an overall structure of a temperature detection board according to an embodiment of this application. FIG. 5 is a cross-sectional diagram along A-A in FIG. 4 according to an embodiment of this application. In this case, the temperature sensor 104 described above with reference to FIG. 1 to FIG. 3 is specifically implemented as a temperature sensor 104A described in FIG. 4 and FIG. 5, and the temperature detection board 103 is specifically implemented as a temperature detection board 103A.

It can be learned that, the temperature sensor 104Ais accommodated in the accommodation space in the temperature detection board 103A. In a specific implementation, a hole may be punched in the temperature detection board 103A based on a shape of the temperature sensor, to form the accommodation space.

Optionally, a shape of the accommodation space of the temperature detection board 103A is related to the shape of the temperature sensor 104A. For example, if the shape of the temperature sensor 104A is a rectangle, a rectangular hole is punched in the temperature detection board 103A; or if the shape of the temperature sensor 104A is a cylinder, a circular hole is punched in the temperature detection board 103A. A specific shape of the accommodation space is not limited in this embodiment of this application.

In this embodiment of this application, surfaces of the temperature detection board 103A that are in direct contact with the first cell and the second cell are both flat without protrusions or depressions, so that impact of uneven force from the temperature detection board 103Aand the temperature sensor 104A on the first cell and the second cell can be alleviated, that is, a degree of damage caused by the uneven force on a separator and an electrode of the first cell and a separator and an electrode of the second cell is reduced.

Optionally, in some feasible implementations, refer to both FIG. 6 and FIG. 7. FIG. 6 is a schematic diagram of another overall structure of a temperature detection board according to an embodiment of this application. FIG. 7 is a cross-sectional diagram along A-A in FIG. 6 according to an embodiment of this application. In this case, the temperature sensor 104 described above with reference to FIG. 1 to FIG. 3 is specifically implemented as a temperature sensor 104B described in FIG. 6 and FIG. 7, and the temperature detection board 103 is specifically implemented as a temperature detection board 103B.

It can be learned that, an outer surface 104B1 of the temperature sensor 104B is flush with a first surface 103B1 of the temperature detection board 103B. In this case, based on a shape of the temperature sensor 104B, an accommodation space may be engraved on the temperature detection board 103B in a laser engraving manner to accommodate the temperature sensor. It should be noted that, the outer surface of the temperature sensor 104B is a surface of the temperature sensor 104B that is close to the first cell or the second cell.

Similarly, a shape of the accommodation space of the temperature detection board 103B is related to a shape of the temperature sensor 104B. For example, if the shape of the temperature sensor 104B is a rectangle, a rectangular groove is engraved in the temperature detection board 103B; or if the shape of the temperature sensor 104B is a cylinder, a circular groove is engraved in the temperature detection board 103B. A specific shape of the accommodation space is not limited in this embodiment of this application.

In this embodiment of this application, the first surface of the temperature detection board 103B that is in direct contact with the first cell is flat without protrusions or depressions. Although the temperature sensor 104B is also in direct contact with one of the first cell and the second cell, the outer surface of the temperature sensor 104B is flush with the first surface of the temperature detection board 103B. Therefore, in general, a degree of damage caused by uneven force on a separator and an electrode of the first cell and a separator and an electrode of the second cell can also be reduced in this application.

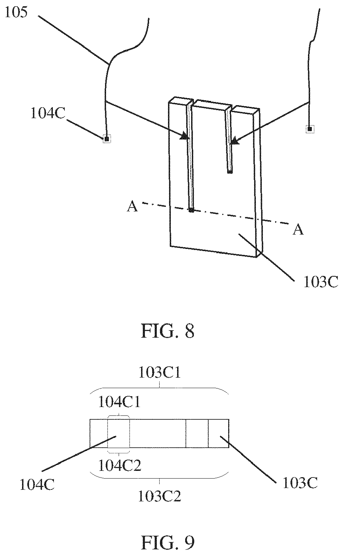

In some feasible implementations, refer to both FIG. 8 and FIG. 9. FIG. 8 is a schematic diagram of an overall structure of a temperature detection board according to an embodiment of this application. FIG. 9 is a cross-sectional diagram along A-A in FIG. 8 according to an embodiment of this application. In a specific implementation, a first outer surface 104C1 of a temperature sensor 104C is flush with a first surface 103C1 of a temperature detection board 103C, and a second outer surface 104C2 of the temperature sensor 104C is flush with a second surface 103C2 of the temperature detection board 103C. It should be noted that, the first outer surface 104C1 of the temperature sensor 104C is a surface of the temperature sensor 104C that is close to the first cell, and the first surface 103C1 of the temperature detection board 103C is a surface of the temperature detection board 103C facing the first cell. The second outer surface 104C2 of the temperature sensor 104C is a surface of the temperature sensor 104C that is close to the second cell, and the second surface 103C2 of the temperature detection board 103C is a surface of the temperature detection board 103C facing the second cell.

In this case, based on a shape of the temperature sensor 104C, an accommodation space may be engraved on the temperature detection board 103C in a laser engraving manner to accommodate the temperature sensor 104C. Similarly, a shape of the accommodation space of the temperature detection board 103C is related to a shape of the temperature sensor 104C. For example, if the shape of the temperature sensor 104C is a rectangle, a rectangle is engraved in the temperature detection board 103C; or if the shape of the temperature sensor 104C is a cylinder, a circle is engraved in the temperature detection board 103C. A specific shape of the accommodation space is not limited in this embodiment of this application.

In this embodiment of this application, because the first outer surface 104C1 of the temperature sensor 104C is flush with the first surface 103C1 of the temperature detection board 103C, and the second outer surface 104C2 of the temperature sensor 104C is flush with the second surface 103C2 of the temperature detection board 103C, that is, the temperature sensor 104C is neither protruded nor depressed relative to the temperature detection board 103C, a degree of damage caused by uneven force on a separator and an electrode of the first cell, and a separator and an electrode of the second cell can also be reduced. In addition, the temperature sensor 104C may be in direct contact with the first cell and the second cell, and use temperatures of the first cell and the second cell that are obtained by direct measurement as internal temperatures of the battery, so that a measurement result is more accurate.

It should be noted that, the terms "first" and "second" are merely intended for a purpose of description, and cannot be understood as indicating or implying relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A battery, wherein the battery comprises a battery housing, at least two cells, a temperature detection board, and a temperature sensor, wherein the at least two cells comprise a first cell and a second cell;
both the first cell and the second cell are disposed in the battery housing;
the temperature detection board is disposed between the first cell and the second cell, and a board body of the temperature detection board is provided with an accommodation space; and
the temperature sensor is placed in the accommodation space, and the temperature sensor is configured to sense an internal temperature of the battery.

2. The battery according to claim 1, wherein a thickness of the temperature detection board is greater than or equal to a thickness of the temperature sensor in a first direction, and the first direction is a direction perpendicular to the temperature detection board.

3. The battery according to claim 2, wherein the temperature sensor is accommodated in the accommodation space in the temperature detection board.

4. The battery according to claim 2, wherein a first surface of the temperature sensor is flush with a first surface of the temperature detection board, and a second surface of the temperature sensor is flush with a second surface of the temperature detection board.

5. The battery according to any one of claims 1 to 4, wherein a first projection of the first cell on a first plane along the first direction overlaps a second projection of the second cell on the first plane along the first direction, and the first direction is perpendicular to the first plane.

6. The battery according to claim 5, wherein an inner surface of the first cell is in contact with the first surface of the temperature detection board, and a contact area between the inner surface of the first cell and the first surface of the temperature detection board is an area of the first surface of the temperature detection board, wherein the inner surface of the first cell is a surface of the first cell facing the temperature detection board; and
the second surface of the temperature detection board is in contact with an inner surface of the second cell, and a contact area between the second surface of the temperature detection board and the inner surface of the second cell is an area of the second surface of the temperature detection board, wherein the inner surface of the second cell is a surface of the second cell facing the temperature detection board.

7. The battery according to claim 5 or 6, wherein a third projection of the temperature detection board on the first plane along the first direction is located in the first projection region or the second projection region.

8. The battery according to any one of claims 1 to 7, wherein a quantity of temperature sensors is related to a size of the first cell and a size of the second cell.

9. The battery according to any one of claims 1 to 8, wherein a shape of the accommodation space of the temperature detection board is related to a shape of the temperature sensor.

10. The battery according to any one of claims 1 to 9, wherein the battery further comprises a signal cable, the signal cable is coupled to the temperature sensor, the battery housing comprises a battery cover, and the battery cover is provided with a reserved hole; and
the signal cable is led out of the battery housing through the reserved hole of the battery cover, and is coupled to a battery management system, and the signal cable is configured to send the internal temperature of the battery sensed by the temperature sensor to the battery management system.

11. The battery according to any one of claims 1 to 10, wherein the temperature sensor comprises at least one of a temperature transducer, a thermistor, a thermocouple, and a resistance and temperature monitor.

12. The battery according to claims 1 to 11, wherein an outer surface of the temperature sensor has an insulating material.

13. The battery according to any one of claims 1 to 12, wherein the temperature detection board is made of a thermal insulation and corrosion-resistant material.

14. An energy storage system, wherein the energy storage system comprises the battery according to any one of claims 1 to 13 and a battery management system coupled to the battery; and
the battery management system is configured to: receive an internal temperature of the battery sensed by the temperature sensor in the battery, and monitor the battery based on the internal temperature of the battery.
